# FASCICULE DE BREVET EUROPEEN

(11) **EP 3 145 644 B1**
(45) Date de publication et mention de la délivrance du brevet: **07.05.2025**
(21) Numéro de dépôt: 15734425.0
(22) Date de dépôt: 22.05.2015
(51) Int. Cl.: B07B 1/22, B07B 1/24, B07B 13/04, B07B 1/46

(54) **MACHINE DE TRI D'UN MELANGE DE DECHETS, ET PROCEDE DE TRI ASSOCIE**
VORRICHUNG UND VERFAHREN ZUR ABFALLTRENNUNG
WASTE MIXTURE SEPARATION DEVICE AND SEPARATION METHOD THEREOF

(30) Priorité: 23.05.2014 FR 1454709
(43) Date de publication de la demande: 29.03.2017
(73) Titulaire: GROUPE VACHER, 43000 Polignac (FR)
(72) Inventeur: CHARREYRE, Fabien Michel Alain, F-43270 Allegre (FR)
(74) Mandataire: Cabinet Didier Martin
(86) Numéro de dépôt international: PCT/FR2015/051372
(87) Numéro de publication internationale: WO 2015/197928

(56) Documents cités:
- EP-A1- 2 253 388
- ES-A1- 2 298 094
- FR-A- 548 985
- FR-A1- 2 668 398
- FR-A1- 2 977 813
- GB-A- 127 783
- GB-A- 2 466 215
- GB-A- 247 315
- KR-A- 20010 089 073
- KR-B1- 101 196 161
- US-A- 6 019 227

## Description

### DOMAINE TECHNIQUE

La présente invention concerne le domaine du tri, et en particulier de l'automatisation du tri à l'aide d'une machine rotative, en particulier pour effectuer le tri de déchets, en vue de leur traitement, en particulier de leur recyclage ou de leur valorisation.

L'invention concerne plus précisément une machine de tri rotative d'un mélange de déchets, ces derniers étant de tailles, de formes et de consistances hétéroclites, le mélange de déchets comprenant au moins des déchets biodégradables et des déchets recyclables non biodégradables.

L'invention concerne également un procédé de tri d'un mélange de déchets de tailles, de formes et de consistances hétéroclites, comprenant au moins des déchets biodégradables et des déchets recyclables non biodégradables, une portion non négligeable de la masse du mélange de déchets étant formée par des déchets biodégradables, par exemple au moins 10 % de la masse, et une portion non négligeable de la masse du mélange étant formée par des déchets recyclables non biodégradables, par exemple au moins 10 % de la masse.

### TECHNIQUE ANTERIEURE

Pour effectuer le tri d'un mélange d'objets salissants, collants, ou ayant une forte tendance à colmater, ou alors d'un mélange d'objets lourds du genre gravats, on peut utiliser un trommel rotatif. Les trommels rotatifs connus sont généralement formés par une enceinte de tamisage rotative autour de son axe longitudinal, lequel est légèrement incliné par rapport à l'horizontale, la paroi de l'enceinte de tamisage étant pourvue d'orifices de séparation traversants calibrés. Grâce à ces orifices, la paroi de l'enceinte permet d'effectuer une ségrégation des objets par taille, permettant de séparer d'une part des objets passants, dont la taille est inférieure à la taille des orifices de séparation, et d'autre part des objets refusés, dont la taille est supérieure à la taille des mailles des orifices de séparation. Ainsi, lorsqu'on introduit des objets à trier à l'intérieur de l'enceinte, par exemple à une première extrémité de cette dernière, il se forme un flux d'objets passant au travers de la paroi de séparation, et un flux d'objets refusés, lesquels sont généralement destinés à sortir par l'intermédiaire de la deuxième extrémité de ladite enceinte. Les objets à trier circulent généralement dans l'enceinte sous l'effet de la gravité, la première extrémité étant placée plus haut que la deuxième extrémité.

Si ce type de trommel rotatif connu donne généralement satisfaction pour certains types d'objets, il semble qu'il pourrait être amélioré pour permettre une meilleure séparation des objets, en particulier pour des objets du type déchets, dont la ségrégation par type (déchets biodégradables, déchets recyclables non biodégradables, déchets non recyclables) est souvent rendue difficile du fait de leur grande hétérogénéité de taille, de forme, de consistance, et de densité, ainsi que de leur caractère généralement collant ou gras.

Le document GB-127,783 A décrit un tambour rond, avec quatre étages divisant l'intérieur du tambour en quatre parties et avec des lames de vis sans fin pour le mouvement continu des matériaux, pour le criblage de matériaux tels que le coke, le sable et le gravier de poussier de coke, le ballast de charbon de laitier de clinker de whinstone, etc.

Le document FR-2 977 813 A1 décrit un procédé, et dispositif correspondant, de tri granulométrique des déchets réglables en fonctionnement comprenant les étapes consistant à séparer selon une coupure réglable des produits selon leur granulométrie un ensemble de déchets unitaires, recueillir une fraction produite sur un convoyeur mobile, garantir l'étanchéité entre les fractions produites dans l'ensemble de la plage de variation, effectuer les réglages sans interrompre la production, adapter la cloison d'étanchéité dans l'ensemble de la plage de variation, et asservir la position du convoyeur navette à des grandeurs physiques observées sur les flux aval.

### EXPOSE DE L'INVENTION

Les objets assignés à la présente invention visent en conséquence à remédier aux différents inconvénients énumérés précédemment et à proposer une nouvelle machine de tri et un nouveau procédé de tri permettant de trier efficacement un mélange de déchets particulièrement hétérogène.

Un autre objet de l'invention vise à proposer une nouvelle machine de tri et un nouveau procédé de tri permettant de faire le tri dans des déchets ménages, issus d'activités économiques ou industrielle de manière efficace.

Un autre objet de l'invention vise à proposer une nouvelle machine de tri et un nouveau procédé de tri permettant d'assurer un tri de bonne qualité.

Un autre objet de l'invention vise à proposer une nouvelle machine de tri et un nouveau procédé de tri particulièrement polyvalents et universels.

Un autre objet de l'invention vise à proposer une nouvelle machine de tri et un nouveau procédé de tri peu coûteux et facile à mettre en œuvre.

Un autre objet de l'invention vise à proposer une nouvelle machine de tri dont l'entretien est particulièrement aisé.

Un autre objet de l'invention vise à proposer une nouvelle machine de tri et un nouveau procédé de tri pour lesquels le risque de colmatage est particulièrement faible.

Les objets assignés à l'invention sont atteints à l'aide d'une machine de tri rotative selon la revendication 1 d'un mélange de déchets, ces derniers étant de tailles, de formes et de consistances hétéroclites, le mélange de déchets comprenant au moins des déchets biodégradables et des déchets recyclables non biodégradables, ladite machine de tri étant caractérisée en ce qu'elle comprend au moins :
- une première section de trommel, pourvue d'une première paroi de séparation s'étendant sur une première longueur axiale et étant pourvue d'une première série d'orifices de séparation traversants permettant de séparer le mélange de déchets en une première fraction de déchets franchissant ladite première paroi de séparation par l'intermédiaire de la première série d'orifices de séparation et en une deuxième fraction résiduelle de déchets, le mélange de déchets étant destiné à circuler le long de ladite première paroi pour être ainsi séparé, et
- une deuxième section de trommel, pourvue d'une deuxième paroi de séparation s'étendant sur une deuxième longueur axiale inférieure à la première longueur, ladite deuxième paroi de séparation étant pourvue d'une deuxième série d'orifices de séparation traversants permettant de séparer la deuxième fraction résiduelle de déchets en une sous-fraction de petits déchets franchissant ladite deuxième paroi de séparation par l'intermédiaire de ladite deuxième série d'orifices de séparation et en une sous-fraction de gros déchets résiduelle, la sous-fraction de gros déchets étant formée par des déchets dont la taille est supérieure à la sous-fraction de petits déchets, la deuxième fraction résiduelle de déchets étant destinée à circuler le long de ladite deuxième paroi pour être ainsi séparée, ladite deuxième série d'orifices de séparation comprenant au moins des orifices tertiaires permettant au moins de contribuer à séparer la deuxième fraction résiduelle de déchets selon la sous-fraction de petits déchets et selon la sous-fraction de gros déchets par passage de la sous-fraction de petits déchets au travers desdits orifices tertiaires, lesdits orifices tertiaires étant de section oblongue, et ladite section oblongue présentant un petit diamètre, et un grand diamètre, les orifices tertiaires étant répartis en rangées successives le long de la deuxième longueur, en alternant au moins :
   o une rangée longitudinale d'orifices tertiaires, dans laquelle le grand diamètre des orifices tertiaires de la rangée droite est aligné dans le sens de la deuxième longueur, et
   o une rangée transversale d'orifices tertiaires, dans laquelle le petit diamètre des orifices tertiaires de la rangée transversale est aligné dans le sens de la deuxième longueur.

Les objets de l'invention sont également atteints à l'aide d'un procédé de tri selon la revendication 10 pour trier un mélange de déchets de tailles, de formes et de consistances hétéroclites, comprenant au moins des déchets biodégradables et des déchets recyclables non biodégradables, une portion non négligeable de la masse du mélange de déchets étant formée par des déchets biodégradables, par exemple au moins 10 % de la masse, et une portion non négligeable de la masse du mélange étant formée par des déchets recyclables non biodégradables, par exemple au moins 10 % de la masse, ledit procédé de tri étant caractérisé en ce que, successivement :
- on introduit le mélange de déchets dans une première section de trommel, pourvue d'une première paroi de séparation s'étendant sur une première longueur axiale et étant pourvue d'une première série d'orifices de séparation traversants,
- on sépare le mélange de déchets en une première fraction de déchets franchissant ladite première paroi de séparation par l'intermédiaire de la première série d'orifices de séparation et en une deuxième fraction résiduelle de déchets résiduelle, le mélange de déchets circulant le long de ladite première paroi pour être ainsi séparé,
- on fait passer la deuxième fraction résiduelle de déchets de la première section de trommel à une deuxième section de trommel, pourvue d'une deuxième paroi de séparation s'étendant sur une deuxième longueur axiale inférieure à la première longueur, ladite deuxième paroi de séparation étant pourvue d'une deuxième série d'orifices de séparation traversants,
- on sépare la deuxième fraction résiduelle de déchets en une sous-fraction de petits déchets franchissant ladite deuxième paroi de séparation par l'intermédiaire de ladite deuxième série d'orifices de séparation et en une sous-fraction de gros déchets résiduelle, la sous-fraction de gros déchets étant formée par des déchets dont la taille est supérieure à la sous-fraction de petits déchets, la deuxième fraction résiduelle de déchets étant destinée à circuler le long de ladite deuxième paroi pour être ainsi séparée,ladite deuxième série d'orifices de séparation comprenant au moins des orifices tertiaires permettant au moins de contribuer à séparer la deuxième fraction résiduelle de déchets selon la sous-fraction de petits déchets et selon la sous-fraction de gros déchets par passage de la sous-fraction de petits déchets au travers desdits orifices tertiaires, lesdits orifices tertiaires étant de section oblongue, et ladite section oblongue présentant un petit diamètre, et un grand diamètre, les orifices tertiaires étant répartis en rangées successives le long de la deuxième longueur, en alternant au moins :
   o une rangée longitudinale d'orifices tertiaires, dans laquelle le grand diamètre des orifices tertiaires de la rangée droite est aligné dans le sens de la deuxième longueur, et
   o une rangée transversale d'orifices tertiaires, dans laquelle le petit diamètre des orifices tertiaires de la rangée transversale est aligné dans le sens de la deuxième longueur.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemple illustratif et non limitatif, dans lesquels :
- La figure 1 représente, selon une vue schématique en perspective, une coupe longitudinale de la machine de tri selon l'invention, laissant en particulier apparaître l'intérieure d'une première et d'une deuxième section de trommel de ladite machine de tri, comportant respectivement une première paroi de séparation et une deuxième paroi de séparation.
- La figure 2 représente, selon une vue schématique de face, un détail de réalisation de la première paroi de séparation de la figure 1.
- La figure 3 illustre, selon une vue schématique de face, un détail de réalisation de la deuxième paroi de séparation de la figure 1

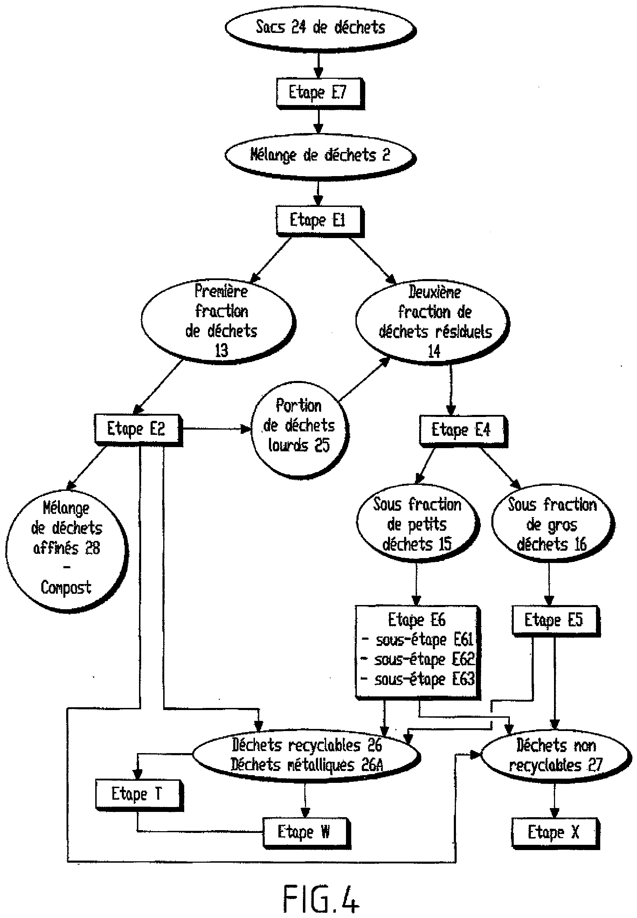

- La figure 4 illustre un procédé de traitement des déchets dans lequel la machine de tri des figures 1 à 3 peut être avantageusement utilisée.

### MEILLEURE MANIERE DE REALISER L'INVENTION

L'invention concerne, en tant que telle, une machine de tri 1 rotative pour trier un mélange de déchets 2. La vocation de cette machine de tri 1 de l'invention est d'organiser les déchets dudit mélange de déchets 2, en classant et en séparant les déchets qu'il contient par catégories en fonction de leur nature ou de caractéristiques propres. Les déchets ainsi triés par la machine de tri 1 pourront de cette façon avantageusement faire l'objet de traitements ultérieurs, par exemple des traitements qui ne pourraient être effectués lorsque lesdits déchets sont à l'état de mélange de déchets 2 initial, tel qu'un recyclage, un compostage, ou une conversion en combustible solide de récupération.

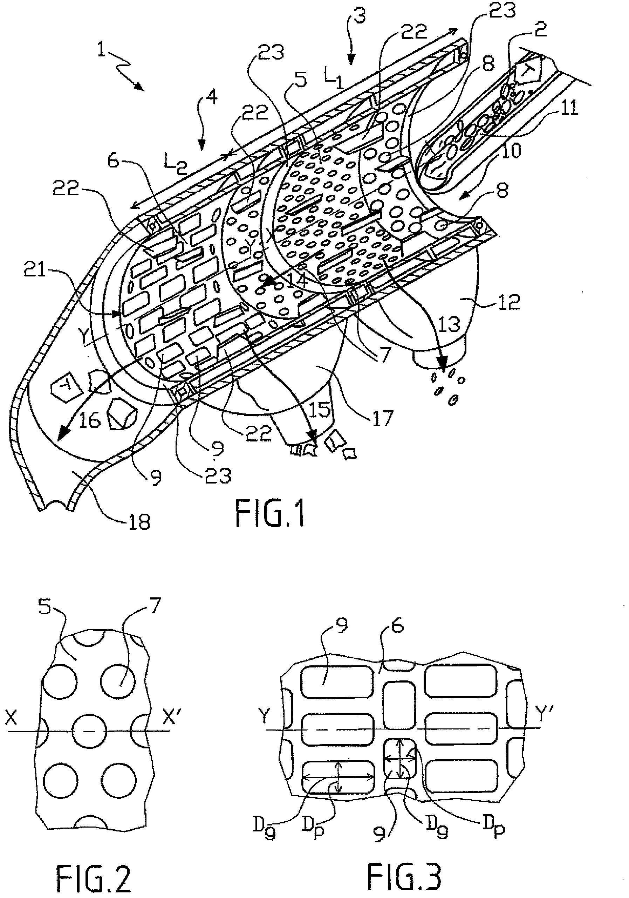

Un exemple de réalisation non exhaustif et non limitatif d'une machine de tri 1 conforme à l'invention est illustré à la figure 1. Une telle machine de tri 1 est avantageusement mise en œuvre dans un procédé industriel de traitement des déchets.

Le mélange de déchets 2 est préférentiellement formé par des déchets ménagers, mais peut aussi être formé par des déchets d'activités économiques ou industrielles, ou les deux, lesdits déchets n'ayant subi aucun tri, ni broyage préalables. Ce mélange de déchets 2 est ainsi avantageusement formé de déchets générés par des ménages, lors de la consommation et de la vie quotidienne de ces derniers.

De préférence, le mélange de déchets 2 n'a subi aucun traitement et forme un mélange de déchets 2 brut. En particulier, n'a été effectué aucun broyage du mélange de déchets brut, ni aucun tri préalable visant à effectuer une ségrégation d'un type de déchet par rapport à un autre, et notamment à effectuer une séparation de déchets biodégradables et de déchets recyclables non biodégradables. De préférence, le mélange de déchets 2 a été collecté, par exemple à l'aide de camions poubelles, auprès des ménages et/ou des activités économiques sans que lesdits ménages et/ou lesdites activités économiques aient effectué un tri ou sélection préalable des déchets collectés. En particulier, la collecte du mélange de déchets 2 n'a pas été sélective. Ainsi, selon une variante particulièrement intéressante de l'invention, le procédé de l'invention est un procédé de traitement d'un mélange de déchets brut non broyés.

Bien entendu, sans sortir du cadre de l'invention, le mélange de déchets 2 pourra au contraire avoir été dépouillé d'une portion des déchets recyclables qu'il contient, par exemple par les ménages à l'occasion d'un pré-tri, ou avoir fait lui-même l'objet d'un pré-tri, par exemple par les ménages.

Les déchets du mélange de déchets 2 sont avantageusement collectés de façon brute et indifférenciée, mélangés dans des sacs, du genre sacs poubelle plastique fermés par les ménages, le procédé comportant une étape préliminaire d'ouverture desdits sacs afin de libérer les déchets qu'ils contiennent de façon individuelle pour former le mélange de déchets 2 selon l'invention, qui est un regroupement des déchets initialement contenu dans lesdits sacs. L'ouverture des sacs de déchets peut être effectuée par exemple à l'aide d'un dispositif d'ouverture de sacs, pour permettre la libération des déchets hors desdits sacs, de préférence sans abîmer ou altérer lesdits déchets.

Notamment du fait de l'absence de tri préalable avant l'entrée du mélange de déchets 2 dans le procédé de traitement de l'invention, les déchets sont de tailles, de formes et de consistances hétéroclites, de préférence de nature et d'origine variées. Le mélange de déchets 2 ainsi considéré pourra notamment comprendre à la fois des déchets mous, durs, coupants, liquides, poudreux, solides, plats, creux, pleins, collants, glissants, gras, cassants, flexibles, compressibles, incompressibles, combustibles, incombustibles, ou encore cumulant plusieurs de ces caractéristiques. Le mélange de déchets 2 contient en majorité des éléments usagés et indésirables, par exemple des déchets alimentaires, des journaux, des papiers, des cartons, du verre, du plastique, du métal, des textiles, des combustibles et incombustibles divers, des matériaux complexes, des déchets dangereux des ménages, des déchets inertes, des encombrants.

Selon l'invention, le mélange de déchets 2 comprend au moins des déchets biodégradables et des déchets non biodégradables, les déchets biodégradables formant avantageusement une portion non négligeable du mélange de déchets 2, par exemple au moins 10 % de la masse de ce dernier.

De manière avantageuse, au moins 10 %, de préférence au moins 20 %, de la masse du mélange de déchets 2 est formée par des déchets biodégradables, et au moins 10 %, de préférence au moins 20 %, de la masse du mélange est formée par des déchets recyclables non biodégradables.

Au sens de l'invention, on entend par « *déchet* biodégradable » un déchet qui, sous l'action d'un milieu naturel, comprenant par exemple des organismes vivants et/ou de l'air et/ou de l'eau, peut naturellement et spontanément se décomposer en éléments divers susceptibles de dommages au milieu naturel (forte demande en oxygène, émission de lixiviats) à défaut d'avoir été stabilisés par exemple par compostage. Les organismes vivants peuvent en particulier être formés par des micro-organismes comme des bactéries, des champignons ou des algues, qui sont de nature à dégrader les déchets biodégradables à l'aide de réactions biochimiques. On entend de préférence par « *déchets biodégradables* » des déchets qui peuvent être dégradés de cette manière à l'échelle temporelle d'une vie humaine, d'une décennie, ou plus préférentiellement d'une année ou de quelques mois, de façon préférée de quelques semaines. On entend de préférence par « *déchets biodégradables* » des déchets susceptibles d'entrer dans la fabrication et la formation de compost par compostage de ces derniers.

Les déchets « *non biodégradables* », au sens de l'invention, forment les autres déchets, qui ne subissent pas spontanément et naturellement une telle dégradation, ou qui la subissent de façon trop lente. Les déchets « *non biodégradables* », sont en particulier inadaptés pour entrer dans la formation de compost par compostage de ces derniers.

Un déchet « *recyclable* », au sens de l'invention, forme un déchet qui peut être facilement transformé par exemple chimiquement ou mécaniquement, pour former une matière recyclée semblable à une matière première, qui peut entrer par exemple dans la fabrication d'un objet. Le terme « déchet recyclable » exclut de préférence les déchets biodégradables, même si leur transformation en compost leur confère en pratique un caractère recyclable. Au sens de l'invention, les déchets recyclables pourront comprendre par exemple :
- des déchets non métalliques, en particulier des polymères, du verre, des papiers, du carton, des journaux, gravats, bois, textile, électronique, etc.
- des déchets métalliques, formés par tout type de métaux.

Au sens de l'invention, le terme « *déchets non recyclable* » fait référence à tout déchet n'entrant pas dans les catégories décrites ci-dessus des « *déchets recyclables* » et des « *déchets biodégradables* ». En particulier, les déchets non recyclables regroupent notamment des déchets présentant un pouvoir calorifique qui les rend susceptibles d'être transformés en combustibles solides de récupération, et d'autres déchets ultimes inutilisables (déchets complexes, etc.) destinés par exemple à l'enfouissement ou à l'incinération.

Selon l'invention, la machine de tri 1 comprend au moins une première section de trommel 3, pourvue d'une première paroi de séparation 5 s'étendant sur une première longueur L1 axiale et étant pourvue d'une première série d'orifices de séparation 7, 8 traversants permettant de séparer le mélange de déchets 2 en une première fraction de déchets 13 franchissant ladite première paroi de séparation 5 par l'intermédiaire de la première série d'orifices de séparation 7, 8 et en une deuxième fraction résiduelle de déchets 14, le mélange de déchets 2 étant destiné à circuler le long de ladite première paroi pour être ainsi séparé.

La première section de trommel 3 est conçue pour recevoir en son sein le mélange de déchets 2 pour effectuer un premier tri de ce dernier. Ladite première section de trommel 3 de l'invention est prévue pour mettre en contact le mélange de déchets 2 avec la première paroi de séparation 5. Au contact de cette dernière, le mélange de déchets 2 est tamisé, et/ou filtré, ladite première paroi de séparation 5 étant poreuse, de manière à autoriser le passage à travers elle-même de la première fraction de déchets 13, et d'interdire le passage à travers elle-même de la deuxième fraction résiduelle de déchets 14. De préférence, la première fraction de déchets 13 est formée par des déchets dont la taille est inférieure, en moyenne, à ceux de la deuxième fraction résiduelle de déchets 14.

Les orifices de séparation 7, 8 de la première série d'orifices de séparation 7, 8 sont ménagés au travers de la première paroi de séparation 5, de manière à la rendre poreuse, et sont calibrés pour laisser passer au travers d'eux même exclusivement la première fraction de déchets 13, dont les éléments sont plus fins que ceux de la deuxième fraction résiduelle de déchets 14, à la manière d'un tamis.

Le mélange de déchets 2 est destiné à progresser, par exemple par gravité, le long de la première paroi de séparation 5 sur toute la première longueur L1. Cette dernière représente avantageusement la longueur poreuse de la première paroi de séparation 5, c'est-à-dire la longueur utile percée par la première série d'orifices de séparation 7, 8.

La première fraction de déchets 13 est évacuée de la première section de trommel 3 à l'aide par exemple de la gravité, dans une première trémie 12 placée au dessous de la première section de trommel 3. La deuxième fraction résiduelle de déchets 14 reste avantageusement canalisée au sein de la première section de trommel 3, et est amenée à passer dans la deuxième section de trommel 4.

Dans la mesure où le mélange de déchets 2 passe en premier lieu dans la première section de trommel 3, ce dernier permet préférentiellement d'en séparer les déchets dont la masse volumique est la plus élevée, dont l'inertie dynamique est la plus importante, les déchets les plus collants, gras, salissants et humides du mélange de déchets 2. La première fraction de déchets 13 est ainsi avantageusement majoritairement formée par des déchets présentant de telles propriétés. En l'espèce, la première fraction de déchets 13 concentre ainsi majoritairement des déchets organiques et/ou biodégradables, lesquels présentent la plupart du temps les propriétés précitées. Ainsi, de façon préférentielle, une portion non négligeable de la masse de la première fraction de déchets 13 est formée par des déchets biodégradables, par exemple au moins 50 % de la masse de la première fraction de déchets 13, voire au moins 60 %, voire préférentiellement au moins 80 %. Également, une portion non négligeable de la masse de la deuxième fraction résiduelle de déchets 14 est avantageusement formée quant à elle par des déchets recyclables non biodégradables, par exemple au moins 10 % de la masse, qui pourront éventuellement être séparés et récupérés ultérieurement.

La première fraction de déchets 13 pourra avantageusement faire l'objet d'un procédé de compostage comportant notamment les étapes successives suivantes :
- Étape A : on fait subir un premier cycle de compostage à la première fraction de déchets 13 de manière à composter au moins en partie les déchets biodégradables de ladite première fraction de déchets 13, et à obtenir un une un mélange de déchets pré-compostés,
- Étape B : on fait subir un séchage au mélange de déchets pré-compostés pour obtenir un mélange de déchets séchés,
- Étape C : on sépare le mélange de déchets séchés en au moins une portion de déchets lourds et une portion de déchets légers, la portion de déchets lourds étant formée par des déchets de masse volumique plus élevée que les déchets de la portion de déchets légers, les déchets lourds pouvant faire l'objet d'un recyclage,
- Étape D : on fait subir un deuxième cycle de compostage à la portion de déchets légers de manière à composter au moins en partie les déchets biodégradables qu'elle contient, et à obtenir un mélange de déchets affinés. Le mélange de déchets affinés forme avantageusement du compost, satisfaisant de préférence à la norme NF U 44-051. La norme NF U 44-051 de 2006, dénommée « *Amendements organiques - Dénominations, spécifications et marquage* », est une norme française.

Bien entendu, sans sortir du cadre de l'invention, la première fraction de déchets 13 pourra être traitée différemment.

De préférence, tel qu'illustré aux figures 1 et 2, la première série d'orifices de séparation 7, 8 comprend au moins des orifices primaires 7 permettant au moins de contribuer à séparer le mélange de déchets 2 selon la première fraction de déchets 13 et selon la deuxième fraction résiduelle de déchets 14 par passage de la première fraction de déchets 13 au travers desdits orifices primaires 7, ces derniers étant d'une taille adaptée pour interdire le passage de déchets d'une taille supérieure à 80 mm. Ne sont ainsi autorisés à passer au travers des orifices primaires 7, dans ce cas préférentiel, que les déchets suffisamment petits, pour former la première fraction de déchets 13. La taille des orifices primaires 7 ainsi choisie permet de préférence d'effectuer une sélection de bonne qualité des déchets biodégradables, c'est-à-dire qu'elle permet d'obtenir une concentration élevée en déchets biodégradables dans la première fraction de déchets 13. A cet effet, les orifices primaires 7 sont préférentiellement de section circulaire, et d'un diamètre compris entre 85 mm et 95 mm, de préférence environ 90 mm. Il convient de bien considérer que, notamment pour s'adapter à la composition du mélange de déchets 2, d'autres tailles et formes d'orifices primaires 7 pourront être envisagées sans sortir du cadre de l'invention, par exemple polygonale, oblongue, plus petite taille, ou plus grande taille.

Les orifices primaires 7 sont avantageusement répartis de façon régulière, de manière à former un maillage, sur la majorité de la surface de la première paroi de séparation 5.

De manière avantageuse, et tel qu'illustré à la figure 1, la première série d'orifices de séparation 7, 8 comprend également des orifices secondaires 8 permettant de contribuer à séparer le mélange de déchets 2 selon la première fraction de déchets 13 et selon la deuxième fraction résiduelle de déchets 14 par passage de la première fraction de déchets 13 au travers desdits orifices secondaires 8, ces derniers étant d'une taille adaptée pour autoriser le passage de déchets dont la taille est comprise entre 1 fois et 1,5 fois la taille des déchets dont le passage est autorisé par les orifices primaires 7, les orifices secondaires 8 étant disposés en amont des orifices primaires 7, en considération du sens de la circulation du mélange de déchets 2.

Contrairement aux trommels usuels, la première paroi de séparation 5 présente avantageusement une porosité décroissante le long de sa première longueur L1, de sorte que le mélange de déchets 2 est d'abord mis en contact avec les orifices secondaires 8, puis avec les orifices primaires 7, la taille des orifices secondaires 8 étant supérieure à la taille des orifices primaires 7. Les orifices secondaires 8 sont préférentiellement de section circulaire, et d'un diamètre compris entre 105 mm et 115 mm, de préférence environ 110 mm. Il convient de bien considérer que, notamment pour s'adapter à la composition du mélange de déchets 2, d'autres tailles et formes d'orifices secondaire 8 pourront être envisagées sans sortir du cadre de l'invention, par exemple polygonale, oblongue, plus petite taille, ou plus grande taille.

Les orifices secondaires 8 sont préférentiellement répartis de façon régulière, de manière à former un maillage, sur une portion minoritaire de la surface de la première paroi de séparation 5 qui est inoccupée par les orifices primaires 7. Les orifices secondaires 8 sont avantageusement répartis sur environ un huitième de la première longueur L1, les orifices primaires 7 occupant sensiblement toute la longueur restante.

Répartis sur une longueur si courte, les orifices secondaires 8 permettent d'inclure à la première fraction de déchets 13 uniquement une portion de déchets de taille supérieure à celle autorisée par les orifices primaires 7 et contenus dans le mélange de déchets 2. De manière particulièrement avantageuse, une telle conception permet d'assurer que la deuxième fraction résiduelle de déchets 14 contienne une proportion moindre, voir sensiblement nulle, de déchets biodégradables, même si une portion plus importante de déchets non biodégradables est susceptible d'être introduite dans la première fraction de déchets 13.

Par conséquent, de préférence, une portion non négligeable de la masse de la deuxième fraction résiduelle de déchets 14 est formée par des déchets recyclables, par exemple au moins 50 % de la masse de la deuxième fraction résiduelle de déchets 14, voire au moins 60 %, voire préférentiellement au moins 80 %. Également, une portion non négligeable, mais la plus réduite possible, de la masse de la première fraction de déchets 13 est avantageusement formée quant à elle par des déchets biodégradables, qui pourront éventuellement être séparés et récupérés ultérieurement. De préférence, moins de 40 % de la masse de la deuxième fraction résiduelle de déchets 14 est formée à ce stade de déchets biodégradables, de préférence moins de 25 %, voire moins de 10 %.

Selon l'invention, la machine de tri 1 comprend également une deuxième section de trommel 4, pourvue d'une deuxième paroi de séparation 6 s'étendant sur une deuxième longueur L2 axiale, ladite deuxième paroi de séparation 6 étant pourvue d'une deuxième série d'orifices de séparation 9 traversants permettant de séparer la deuxième fraction résiduelle de déchets 14 en une sous-fraction de petits déchets 15 franchissant ladite deuxième paroi de séparation 6 par l'intermédiaire de ladite deuxième série d'orifices de séparation 9 et en une sous-fraction de gros déchets 16 résiduelle, la sous-fraction de gros déchets 16 étant formée par des déchets dont la taille est supérieure à la sous-fraction de petits déchets 15, la deuxième fraction résiduelle de déchets 14 étant destinée à circuler le long de ladite deuxième paroi pour être ainsi séparée.

La deuxième section de trommel 4 est conçue pour recevoir en son sein la deuxième fraction résiduelle de déchets 14, provenant de la première section de trommel 3, pour effectuer un deuxième tri de ladite deuxième fraction résiduelle de déchets 14. La deuxième section de trommel 4 de l'invention est prévue pour mettre en contact la deuxième fraction résiduelle de déchets 14 avec la deuxième paroi de séparation 6. Au contact de cette dernière, la deuxième fraction résiduelle de déchets 14 est tamisée, et/ou filtrée, ladite deuxième paroi de séparation 6 étant poreuse, de manière à autoriser le passage à travers elle-même de la sous-fraction de petits déchets 15, et d'interdire le passage à travers elle-même de la sous-fraction de gros déchets 16.

Les orifices de séparation 9 de la deuxième série d'orifices de séparation 9 sont ménagés au travers de la deuxième paroi de séparation 6, de manière à la rendre poreuse, et sont calibrés pour laisser passer au travers d'eux même exclusivement la sous-fraction de petits déchets 15, dont les éléments sont plus fins que ceux de la sous-fraction de gros déchets 16, à la manière d'un tamis.

La deuxième fraction résiduelle de déchets 14 est destiné à progresser, par exemple par gravité, le long de la deuxième paroi de séparation 6 sur toute la deuxième longueur L2. Cette dernière représente avantageusement la longueur poreuse de la deuxième paroi de séparation 6, c'est-à-dire la longueur utile percée par la deuxième série d'orifices de séparation 9.

Tel qu'illustré à la figure 1, la sous-fraction de petits déchets 15 est évacuée de la deuxième section de trommel 4 à l'aide par exemple de la gravité, dans une deuxième trémie 17 placée au dessous de la deuxième section de trommel 4. La sous-fraction de gros déchets 16 reste préférentiellement canalisée au sein de la deuxième section de trommel 4 et évacuée de ce dernier. De préférence, la deuxième section de trommel 4 présente pour cela une sortie de refus par l'intermédiaire de laquelle la sous-fraction de gros déchets 16 est destinée à sortir de ladite deuxième section de trommel 4. La sortie de refus 21 débouche avantageusement vers une trémie d'évacuation 18 connectée à l'extrémité de la deuxième section de trommel 4, et dans laquelle la sous-fraction de gros déchets 16 tombe par gravité.

Dans la mesure où la deuxième fraction résiduelle de déchets 14 est préférentiellement sensiblement dénuée de déchets biodégradables, salissants, collants et/ou de masse volumique élevée, lesquels ont été écartés par la première section de trommel 3, la deuxième section de trommel 4 permet préférentiellement d'effectuer un tri des déchets, incluant notamment des déchets recyclables, présents dans la deuxième fraction résiduelle de déchets 14. Elle permet en particulier, de façon préférentielle, d'isoler des déchets de taille relativement importante contenus dans la sous-section de gros déchets 16, qui pourront par exemple faire l'objet d'un tri manuel biodégradables, les déchets recyclables et les déchets non recyclables. Les déchets plus petits avantageusement contenus dans la sous-section de petits déchets 15 pourront quant à eux faire par exemple l'objet d'un tri automatisé visant à séparer les déchets biodégradables, les déchets recyclables et les déchets non recyclables. En tout état de cause, les tris ultérieurs effectués sur la sous-section de petits déchets 15 et sur la sous-section de gros déchets 16 sont avantageusement facilités, dans la mesure où les déchets sont, à ce stade, sensiblement nettoyés des déchets organiques et/ou biodégradables, collants, salissants et nauséabonds.

Selon l'invention, la deuxième série d'orifices de séparation 9 comprend au moins des orifices tertiaires 9 permettant au moins de contribuer à séparer la deuxième fraction résiduelle de déchets 14 selon la sous-fraction de petits déchets 15 et selon la sous-fraction de gros déchets 16 par passage de la sous-fraction de petits déchets 15 au travers desdits orifices tertiaires 9, ces derniers étant d'une taille adaptée pour interdire le passage de déchets d'une taille supérieure à au moins 200 mm, voire 300 mm. Ne sont ainsi autorisés à passer au travers des orifices tertiaires 9, dans ce cas préférentiel, que les déchets suffisamment petits, pour former la sous-fraction de petits déchets 15. La taille des orifices tertiaire 9 ainsi choisie permet de préférence d'effectuer une sélection d'un type prédéterminé de déchets recyclables, c'est-à-dire qu'elle permet d'obtenir une concentration élevée de ce type particulier de déchets recyclables la sous-fraction de petits déchets 15. Pour ce faire, les orifices tertiaires 9 sont de section oblongue, et ladite section oblongue présentant un petit diamètre Dp, et un grand diamètre Dg, tel qu'illustré en particulier à la figure 3. L'expression « section *oblongue* » inclut de préférence une forme de section par exemple rectangulaire ou elliptique, ou une forme combinant les caractéristiques de ces dernières. De manière avantageuse, on choisit le grand diamètre Dg et le petit diamètre Dp pour qu'ils correspondent à des types de déchets que l'on souhaite inclure en particulier dans la sous-fraction de petits déchets 15. Par exemple, le mélange de déchets 2 étant susceptible de contenir des bouteilles en plastique ou en verre, dont la taille standard est généralement d'une trentaine de centimètres, on pourra choisir un grand diamètre Dg d'une taille légèrement supérieure à la taille desdites bouteilles, c'est-à-dire légèrement supérieure à une trentaine de centimètres. De même, par exemple, le mélange de déchets 2 étant susceptible de contenir des journaux usagés, dont la taille standard est généralement d'une vingtaine de centimètres, on pourra choisir un petit diamètre Dp d'une taille légèrement supérieure à la taille desdits journaux, c'est-à-dire légèrement supérieure à une vingtaine de centimètres.

Par conséquent, de préférence, pour chaque orifice tertiaire, le petit diamètre Dp est compris entre 200 et 240 mm, de préférence environ 220 mm, le grand diamètre Dg étant compris entre 300 et 400 mm, de préférence environ 330 mm, le petit diamètre Dp étant sensiblement perpendiculaire au grand diamètre Dg, tel qu'illustré en particulier à la figure 3. Bien entendu, notamment pour s'adapter à la composition du mélange de déchets 2 initial, d'autres tailles et formes d'orifices tertiaires 9 pourront être envisagées sans sortir du cadre de l'invention, par exemple polygonale, circulaire, plus petite taille, ou plus grande taille.

Selon l'invention et tel qu'illustré à la figure 3, les orifices tertiaires 9 sont répartis en rangées successives le long de la deuxième longueur L2, en alternant au moins :
- une rangée longitudinale 19 d'orifices tertiaires 9, dans laquelle le grand diamètre Dg des orifices tertiaires 9 de la rangée droite est aligné dans le sens de la deuxième longueur L2, et
- une rangée transversale 20 d'orifices tertiaires 9, dans laquelle le petit diamètre Dp des orifices tertiaires 9 de la rangée transversale 20 est aligné dans le sens de la deuxième longueur L2.

De préférence, le grand diamètre Dg des orifices tertiaires 9 est parallèle à un deuxième axe longitudinal Y-Y' du deuxième trommel 4, tel que décrit plus bas. De préférence au contraire, le grand diamètre Dg des orifices tertiaires 9 est perpendiculaire au deuxième axe longitudinal Y-Y'.

D'une rangée à l'autre, les orifices tertiaires 9 sont ainsi préférentiellement sensiblement perpendiculaires les uns aux autres, de manière à anticiper l'orientation des déchets à inclure dans la sous-fraction de petits déchets 15, et d'améliorer l'efficacité du tri de la deuxième section de trommel 4.

De préférence, la deuxième série d'orifices de séparation 9 sera formée d'une alternance de rangées longitudinales 19 et de rangées transversales 20 d'orifices tertiaires 9.

Bien entendu, d'autres dispositions des orifices tertiaires pourront être envisagées sans sortir du cadre de l'invention.

Avantageusement, la première série d'orifices de séparation 7, 8 est répartie sensiblement sur toute la première longueur L1 de la première section de trommel 3, la deuxième série d'orifices de séparation 9 est répartie sensiblement sur toute la deuxième longueur L2 de la deuxième section de trommel 4, de manière à être répartis sur au moins la majorité de, voire sur toute, la surface formée par la première paroi de séparation 5 et par la deuxième paroi de séparation 6. Une telle conception permet d'augmenter la proportion utile de desdites parois de séparation, et ainsi d'améliorer la compacité de la machine de tri 1 de manière générale.

Selon une caractéristique particulièrement importante de l'invention, la deuxième longueur L2 est inférieure à la première longueur L1. Ainsi, la première section de trommel 3, et en particulier la première paroi de séparation 5 est d'une longueur supérieure à celle de la deuxième section de trommel 4, et en particulier la deuxième paroi de séparation 6. Une telle conception permet à la première section de trommel 3 d'assurer efficacement la séparation d'une majorité, voire de tous les déchets biodégradables initialement contenus dans le mélange de déchets 2. En effet, la première longueur L1 est avantageusement choisie pour être suffisamment longue afin que tous les déchets du mélange de déchets 2 susceptibles de traverser la première paroi de séparation 5 soient effectivement inclus dans la première faction de déchets 13.

De façon préférentielle, la première longueur L1 vaut au moins 1,05 fois la deuxième longueur L2, de préférence au moins 1,10 fois, de manière encore plus préférentielle au moins 1,12 fois. La somme de la première longueur L1 et de la deuxième longueur L2 vaut avantageusement entre 10 et 20 20 m. La machine de tri 1 est préférentiellement conçue pour trier entre 10 et 50 T/h de mélange de déchets (2).

De manière avantageuse :
- la première fraction de déchets 13 représente entre 35 et 60 % de la masse du mélange de déchets 2 initial, de préférence environ 42 %,
- la sous-fraction de petits déchets 15 représente entre 20 et 40 % de la masse du mélange de déchets 2 initial, de préférence environ 28 %,
- la sous-fraction de gros déchets 16 représente entre 20 et 40 % de la masse du mélange de déchets 2 initial, de préférence environ 30 %.

De façon préférentielle, tel que représenté par exemple à la figure 1, la première paroi de séparation 5 présente une forme générale de prisme, de cylindre ou de tronc de cône, dont la hauteur forme un premier axe longitudinal X-X' de la première paroi de séparation 5, cette dernière étant mise en rotation autour du premier axe longitudinal X-X'.

De manière avantageuse, la deuxième paroi de séparation 6 présente une forme générale de prisme, de cylindre ou de tronc de cône, dont la hauteur forme un deuxième axe longitudinal Y-Y' de la deuxième paroi de séparation 6, cette dernière étant mise en rotation autour du deuxième axe longitudinal Y-Y'.

Le premier axe longitudinal X-X' et/ou le deuxième axe longitudinal Y-Y' sont préférentiellement légèrement inclinés par rapport à l'horizontale, de manière à permettre, par gravité, une progression des déchets dans les sections de trommel selon un sens de circulation prédéterminé, avantageusement de l'entrée d'admission 10, vers la deuxième section de trommel 4, jusqu'à la trémie d'évacuation 18 en sortie de refus de la deuxième section de trommel 4.

La mise en rotation de la première section de trommel 3 et/ou de la deuxième section de trommel 4 permet aux déchets d'être brassés et retournés, afin qu'au moins une majorité d'entre eux, sinon tous, aient la possibilité d'entrer en contact avec la première paroi de séparation 5 et/ou la deuxième paroi de séparation 6 pour être triés.

Pour permettre un meilleur brassage des déchets et améliorer l'efficacité du tri de la machine de tri 1, la première section de trommel 3 et/ou la deuxième section de trommel 4 sont conçues chacune pour être mises en rotation indépendamment ou non l'une de l'autre, la rotation indépendante de la première section de trommel 3 et/ou la rotation indépendante de la deuxième section de trommel 4 et/ou la rotation dépendante des deux s'effectuant de préférence alternativement dans un sens et dans l'autre selon une fréquence souhaitée, autour de leurs axes longitudinaux respectifs.

On peut avantageusement choisir une forme cylindrique, qui permet aux déchets, lors de la rotation des sections de trommel, de se frotter les uns aux autres de manière à se nettoyer mutuellement des déchets collants. Alternativement on pourra par exemple choisir une forme prismatique de base octogonale pour entraîner un rebond des déchets sur les parois, afin de permettre une meilleure séparation des déchets les uns des autres.

Le diamètre de la première section de trommel 3 et de la deuxième section de trommel 4 est avantageusement compris entre 2 et 3 m.

Par conséquent, tel qu'illustré à la figure 1, la première série d'orifices de séparation 7, 8 est répartie de préférence sur toute la circonférence de la première paroi de séparation 5, la deuxième série d'orifices de séparation 9 étant répartie sur toute la circonférence de la deuxième paroi de séparation 6.

De préférence, et tel qu'illustrés aux figures, les orifices de séparation 7, 8 de la première série d'orifices de séparation 7, 8 sont répartis sur la première paroi de séparation 5 selon un premier maillage en quinconce, les orifices de séparation 9 de la deuxième série d'orifices de séparation 9 étant répartis sur la deuxième paroi de séparation 6 selon un deuxième maillage en quinconce. De cette manière, les orifices de séparation 7, 8, 9 sont disposés à la fois en une première hélice et une deuxième hélice croisée, ce qui améliore l'efficacité du tri lors de la circulation des déchets dans la première section de trommel 3 et dans la deuxième section de trommel 4, quel que soit le sens de rotation desdits sections de trommel 3, 4.

De façon préférentielle, la première paroi de séparation 5 et/ou la deuxième paroi de séparation 6 est pourvue d'ailettes de relevage 22 des déchets circulant dans la première section de trommel 3 et/ou dans la deuxième section de trommel 4, respectivement. Les ailettes de relevage 22 sont de préférence disposées chacune dans le sens longitudinal des sections de trommel 3, 4, de manière à entraîner, à relever et à remuer les déchets lors de la rotation desdites sections de trommel 3, 4. Les ailettes de relevage 22 sont avantageusement disposées en quinconce.

Tel qu'illustré à la figure 1, la première section de trommel 3 et la deuxième section de trommel 4 forment un unique trommel 3, 4 rotatif de façon monobloc autour d'un unique axe longitudinal X-X'-Y-Y', l'extrémité de sortie de la première section de trommel 3 étant directement connectée à l'extrémité d'entrée de la deuxième section de trommel 4. Dans ce cas préférentiel, les sections de trommel 3, 4 sont solidaires, et forment un tambour unique.

Dans ce cas préférentiel représenté à la figure 1, la machine de tri 1 comprend trois reprises d'effort 23 permettant de soutenir et/ou d'entraîner en rotation l'unique trommel, deux des reprises d'effort 23 étant placées aux extrémités de l'unique trommel, la dernière étant placée de façon sensiblement médiane aux deux autres. Le reprises d'effort 23 correspondent par exemple à des roulements, et/ou à des moyens d'entraînement du genre roue dentée d'engrenage ou poulie d'entraînement. La reprise d'effort médiane 23 permet avantageusement d'éviter tout risque de flexion de l'unique trommel 3, 4, notamment dans le cas où sa longueur totale est importante et où la quantité de déchets en son sein est particulièrement massive.

Alternativement, selon une autre variante préférentielle de l'invention non représentée aux figures, il est possible d'envisager que la première section de trommel 3 et la deuxième section de trommel 4 forment deux trommels indépendants, la machine de tri 1 incluant des moyens de transfert de la deuxième fraction résiduelle de déchets 14 depuis la première section de trommel 3 jusqu'à la deuxième section de trommel 4.

La première section de trommel 3 comprend de préférence une sortie de transfert de la deuxième fraction résiduelle de déchets 14, la deuxième section de trommel 4 comprenant une entrée secondaire de la deuxième fraction résiduelle de déchets 14. L'entrée secondaire est avantageusement connectée à la sortie de transfert, pour que les déchets puissent circuler depuis la première section de trommel 3 jusqu'à la deuxième section de trommel 4. Préférentiellement, la machine de tri 1 est conçue pour que la deuxième fraction résiduelle de déchet 14 tombe par gravité depuis la première section de trommel 3 dans la deuxième section de trommel 4.

A titre purement illustratif, la variante de l'invention représentée aux figures peut fonctionner de la manière décrite ci-après.

L'unique trommel 3, 4 étant en rotation de façon alternative dans un sens et dans l'autre autour de son axe longitudinal, on introduit par l'entrée d'admission 10 le mélange de déchets 2 à trier.

Le mélange de déchets 2 circule tout d'abord dans la première section de trommel 3 de manière à être séparé :
- d'une part en une première fraction de déchets 13, qui passe au travers de la première paroi de séparation 5 pour tomber dans la première trémie 12, et
- d'autre part une deuxième fraction résiduelle de déchets 14 qui reste à l'intérieur de l'unique trommel 3, 4 et progresse en direction de la deuxième section de trommel 4.

En atteignant la deuxième section de trommel 4, la deuxième fraction résiduelle de déchets 14 est à nouveau triée, et en l'espèce séparée :
- d'une part en une sous-fraction de petits déchets 15, qui passe au travers de la deuxième paroi de séparation 6 pour tomber dans la deuxième trémie 17, et
- d'autre part en une sous-fraction de gros déchets 16, qui est évacuée de la deuxième section de trommel 4 par la sortie de refus 21, de manière à tomber dans la trémie d'évacuation 18.

Les fractions et sous-fractions de déchets 13, 15, 18 récupérées de façon séparée dans les trémies 12, 17, 18 peuvent ainsi être traitées de façon séparée, en dépit de la très grande hétérogénéité du mélange de déchets 2 initial.

De préférence, la machine de tri 1 décrite ci-dessus pourra être intégrée dans un procédé de traitement des déchets plus global, en particulier pour effectuer une étape E1 de ce dernier, tel qu'illustré à la figure 2.

Le procédé de traitement comporte préférentiellement l'étape E1 au cours de laquelle on sépare le mélange de déchets 2 en une première fraction de déchets 13 dont la taille est inférieure à environ 180 mm, de préférence inférieure à 140 mm, et une deuxième fraction résiduelle de déchets 14.

L'étape E1 est avantageusement effectuée à l'aide d'une machine de tri 1 décrite ci-avant.

On entend par « *taille* », de manière générale, une dimension de l'espace du déchet selon sa longueur la plus grande, ou une dimension caractéristique. On entend par « *taille* » d'un déchet, une dimension géométrique caractéristique du déchet individuel, qui lui permet par exemple de passer au travers d'une maille de taille correspondante si la taille du déchet est inférieure à la taille de la maille, ou au contraire de ne pas passer si la taille dudit déchet est supérieure à la taille de ladite maille.

On entend par « *deuxième portion résiduelle de déchets* » la portion restante de déchets, qui n'a pas correspondu aux caractères de séparation de la première portion de déchets 13, en l'espèce le critère de taille. Rien n'interdit cependant que, au sens de l'invention, que des déchets qui auraient pu satisfaire au critère de séparation, en l'espèce de taille, de la première portion de déchets 13 puissent exister également dans la deuxième portion résiduelle de déchets 14. Par exemple, la deuxième portion résiduelle de déchets 14 peut contenir des déchets dont la taille est inférieure à 50 mm.

De cette manière, la première fraction de déchets 13 est avantageusement formée par des déchets présentant en moyenne une masse volumique plus élevée que les déchets de la deuxième fraction résiduelle de déchets 14, dans la mesure où, en pratique, les déchets de masse volumique la plus élevée sont préférentiellement de taille inférieure à 180 mm.

Selon l'invention, le procédé de tri pour trier un mélange de déchets 2 est caractérisé en ce que l'on introduit le mélange de déchets 2 dans une première section de trommel 3 pourvue d'une première paroi de séparation 5 dont première longueur L1 vaut au moins 1,05 fois, de préférence au moins 1,10 fois, de manière encore plus préférentielle au moins 1,12 fois la deuxième longueur L2 de la deuxième section de trommel 4 dans laquelle on fait passer la deuxième fraction résiduelle de déchets 14.

De préférence, l'étape E1 du procédé inclut ainsi une séparation des déchets dont la taille est suffisamment petite, dont la masse volumique est la plus élevée, dont la masse volumique est la plus élevée, dont l'inertie dynamique est la plus importante, les déchets les plus collants, gras, salissants et humides du mélange de déchets 2 pour former la première fraction de déchets. Cette dernière est ainsi avantageusement formée au moins d'une majorité de déchets présentant de telles propriétés. De préférence, en l'espèce, la première fraction de déchets 13 concentre ainsi majoritairement des déchets organiques et/ou biodégradables, lesquels présentent la plupart du temps les propriétés précitées.

A l'issue de cette première séparation ainsi effectuée lors de l'étape E1, la première fraction de déchets 13 et la deuxième fraction résiduelle de déchets 14 pourront être traitées plus facilement dans les étapes suivantes du procédé, notamment dans la mesure où les déchets de la deuxième fraction résiduelle de déchets 14 sont, à ce stade, nettoyés de la plupart des déchets organiques et/ou biodégradables, collants, salissants et nauséabonds.

De préférence, les déchets de la première fraction de déchets 13 ont une taille inférieure à environ 110 mm, et sont séparés à l'aide de la machine de tri 1 précédemment décrite.

De manière avantageuse, le procédé comporte, à l'issue de l'étape E1 ou simultanément à cette dernière, une étape E4 de séparation de la deuxième fraction résiduelle de déchets 14 en une sous-fraction de gros déchets et une sous-fraction de petits déchets 15, la sous-fraction de gros déchets étant formée par des déchets dont la taille est supérieure à la sous-fraction de petits déchets 15. La sous-fraction de gros déchets est préférentiellement formée par des déchets dont la taille est supérieure à environ 330 mm, la sous-fraction de petits déchets 15 étant formée par des déchets dont la taille est inférieure à environ 330 mm. L'étape E4 pourra également être effectuée par à l'aide de la machine de tri 1 décrite ci-avant.

Le procédé de traitement comporte préférentiellement une étape E5 de tri manuel de la sous-fraction de gros déchets 16, permettant de séparer d'une part les déchets recyclables 26 qu'elle contient, et d'autre part les déchets non recyclables 27 qu'elle contient. Le tri manuel est avantageusement rendu possible à ce stade, dans la mesure où les déchets sont de taille suffisamment conséquente, dépourvus de déchets de petite taille et de la plupart des fines. De plus, les déchets sont avantageusement dépourvus de la plupart de la matière collante et nauséabonde formée par la matière biodégradable, ce qui rend possible le tri manuel. Le tri manuel permet notamment de séparer de la sous-fraction de gros déchets 16 des déchets métalliques 26A, des déchets plastiques, des déchets électroniques de taille importante, des emballages en carton, etc.

Les déchets reconnus comme étant des déchets recyclables au cours du tri manuel seront avantageusement envoyés vers une étape W de recyclage, tel que décrite ci-après. Les déchets résiduels qui ne sont pas séparés pour recyclage seront avantageusement envoyés vers une étape X de fabrication de combustible solide de récupération, qu'ils soient effectivement recyclables ou non recyclables.

De préférence, le procédé de traitement comporte une étape E6 de tri automatisé de la sous-fraction de petits déchets 15, permettant de séparer d'une part les déchets recyclables 26 qu'elle contient, et d'autre part les déchets non recyclables 27 qu'elle contient. La sous-fraction de petits déchets 15 est de préférence adaptée à un tri automatique, les petits déchets 15 étant plus légers pour être par exemple manipulés par des appareils de tri.

L'étape E6 comporte de préférence une première sous-étape E61 de séparation de déchets métalliques 26A contenus dans la sous-fraction de petits déchets 15, par exemple à l'aide d'un séparateur électromagnétique et/ou d'un séparateur à courant de Foucault, de manière à séparer au moins la majorité des déchets métalliques 26A contenus dans ladite sous-fraction de petits déchets 15, les déchets métalliques 26A formant au moins en majorité des déchets recyclables 26. Les déchets métalliques 26A peuvent ainsi avantageusement être extraits de la sous-fraction de petits déchets 15, dans la mesure où ladite sous-fraction de petits déchets 15 est préférentiellement sensiblement dénuée de déchets biodégradables collants.

De préférence, l'étape E6 comporte une deuxième sous-étape E62, de séparation de la sous-fraction de petits déchets 15 en un flux de déchets sensiblement plats et un flux de déchets sensiblement volumiques. De cette manière, les deux flux de déchets pourront être dirigés vers des machines de tri adaptées à la morphologie des déchets qu'ils contiennent.

On entend par « *déchets sensiblement plats* », les déchets s'étendant majoritairement de façon surfacique, comme par exemple des journaux, des papiers, des plaques de matière plastique diverses. Le terme « *déchets sensiblement plats* » englobe avantageusement également des déchets volumiques suffisamment mous, ou de résistance mécanique suffisamment faible pour pouvoir être aplatis ou compactés facilement, par exemple certaines boîtes en carton.

On entend par « *déchets sensiblement volumiques* », des déchets qui s'étendent selon trois dimensions de l'espace, qui peuvent être creux, et qui résistent davantage que les déchets sensiblement plats à la compaction, qui sont plus rigides, ou plus solides. A titre d'exemple, les déchets sensiblement volumiques pourront comprendre des bouteilles en plastique ou en verre, des boîtes en plastique, des flacons et contenants divers.

Cette sous-étape E62 est préférentiellement effectuée à l'aide d'un séparateur à tapis balistique (non représenté). Le tapis balistique présente, de préférence, une inclinaison par rapport à l'horizontale de façon à former une pente, la bande de roulement étant conçue pour fournir un mouvement d'avance dans le sens de la montée de la pente. De manière avantageuse, les déchets sensiblement volumiques sont destinés à rouler et rebondir sur le tapis balistique par gravité de manière à dévaler la pente en direction d'un moyen de récupération bas du genre bac ou convoyeur, intégrant optionnellement un piège à verre. Les déchets sensiblement plats sont quant à eux préférentiellement entraînés vers le haut de la pente par le mouvement d'avance du tapis, vers un moyen de récupération haut, par exemple un autre convoyeur, de sorte que les déchets sensiblement plats et les déchets sensiblement volumiques sont séparés.

Les particules fines susceptibles d'être contenues dans la sous-fraction de petits déchets 15 adhèrent avantageusement au tapis balistique (ce dernier peut éventuellement être humidifié pour amplifier cet effet), et pourront avantageusement être raclées et récupérées à l'aide par exemple d'un racleur de bande en tungstène monté sur ledit tapis. La bande de roulement du tapis balistique peut avantageusement présenter des propriétés d'élasticité de nature à permettre le rebondissement des déchets sensiblement volumiques.

Le tapis balistique est préférentiellement combiné à un tapis accélérateur monté en amont, permettant d'accélérer la sous-fraction de petits déchets 15 de manière à ce que ces derniers atteignent le tapis balistique du séparateur à tapis balistique avec une vitesse prédéterminée.

De préférence, l'étape E6 comporte une troisième sous-étape E63 de tri robotisé d'une part du flux de déchets sensiblement plats et d'autre part du flux de déchets sensiblement volumiques, pour séparer de chacun desdits flux des déchets recyclables 26 et des déchets non-recyclables, la troisième sous-étape E63 étant effectuée à l'issue de la deuxième sous-étape E62. On choisira avantageusement des robots de tri distincts et adaptés respectivement au tri d'une part des déchets sensiblement plats et d'autre part des déchets sensiblement volumiques. Les robots de tri sont de préférence conçus pour séparer les déchets recyclables des déchets sensiblement plats et des déchets sensiblement volumiques par reconnaissance de ces derniers, en particulier par reconnaissance de signature optique, permettant en particulier au robot de tri de détecter le matériau du déchet à trier. Les déchets recyclables reconnus par les robots de tri seront avantageusement envoyés vers une étape W de recyclage. Les déchets non reconnus, incluant préférentiellement une faible proportion de déchets recyclables et une majorité de déchets non recyclables, seront avantageusement envoyés vers une étape X de fabrication de combustible solide de récupération.

Après tri par les robots de tri, avant l'étape W de recyclage, les déchets recyclables pourront avantageusement faire l'objet d'une étape T du procédé de traitement, au cours de laquelle on sépare des déchets métalliques non ferreux des déchets recyclables, par exemple à l'aide d'un séparateur à courant de Foucault. A ce stade du procédé, les déchets métalliques non ferreux sont par exemple formés par des déchets aluminium, ou encore emballages souples alimentaires contenant une feuille d'aluminium.

De manière avantageuse, les flux distincts de déchets sensiblement volumiques et de déchets sensiblement plats sont convoyés à l'aide d'un jeu convoyeurs à bandes jusqu'aux robots de tri, le jeu de convoyeurs à bandes étant conçu pour étaler et répartir les déchets de manière à ce que sensiblement aucun déchet ne soit superposé à un autre lors de l'arrivée desdits déchets au niveau des robots de tri. L'efficacité du tri par les robots est ainsi avantageusement améliorée.

Les sous-étapes E61, E62 et E63 sont préférentiellement effectuées successivement dans cet ordre.

Le procédé de traitement comporte préférentiellement également une étape E2, effectuée successivement à l'étape E1, au cours de laquelle on fait subir un processus de compostage à la première fraction de déchets 13 de manière à composter au moins en partie les déchets biodégradables qu'elle contient.

L'étape E2 vise ainsi préférentiellement à valoriser la première fraction de déchets 13, et en particulier à convertir les déchets biodégradables qu'elle contient en un mélange de déchets affinés 28, de manière à ce que, de préférence, le mélange de déchets affinés 28 forme du compost satisfaisant à la norme NF U 44-051. La norme NF U 44-051 de 2006, dénommée « *Amendements organiques - Dénominations, spécifications et marquage* », est une norme française.

Le processus de compostage de l'étape E2 comporte avantageusement les étapes successives suivantes :
- Étape A : on fait subir un premier cycle de compostage à la première fraction de déchets 13 de manière à composter au moins en partie les déchets biodégradables de ladite première fraction de déchets 13, et à obtenir un mélange de déchets 2 pré-compostés,
- Étape B : on fait subir un séchage au mélange de déchets 2 pré-compostés pour obtenir un mélange de déchets 2 séchés,
- Étape C : on sépare le mélange de déchets 2 séchés en au moins une portion de déchets lourds 25 et une portion de déchets légers, la portion de déchets lourds 25 étant formée par des déchets de masse volumique plus élevée que les déchets de la portion de déchets légers,
- Étape D : on fait subir un deuxième cycle de compostage à la portion de déchets légers de manière à composter au moins en partie les déchets biodégradables qu'elle contient, et à obtenir un mélange de déchets affinés 28, en particulier du compost.

L'étape E2 inclut avantageusement le traitement de la première fraction de déchets 13 par deux cycles de compostage successifs séparés par une étape de séchage du de la première fraction de déchets 13 à l'issue du premier cycle de compostage pour faciliter la séparation et l'affinage plus facile de la première fraction de déchets 13. Ainsi, même si la première fraction de déchets 13 est particulièrement hétéroclite et présente de nombreux indésirables non susceptibles d'être traités par compostage, il est possible d'affiner ce dernier à l'aide de l'étape E2 pour obtenir des déchets affinés 28 dont la valeur est supérieure à celle du mélange de déchet initial.

Au sens de l'invention, on entend par « *compostage* » un processus biologique de conversion et de valorisation des déchets organiques, et notamment des déchets biodégradables contenus dans la première fraction de déchets 13, en favorisant et/ou en accélérant le processus naturel de biodégradation. Les cycles de compostages de l'étape E2 permettent préférentiellement de convertir au moins une portion de la première fraction de déchets 13 en un produit stabilisé, hygiénique, riche en composés humiques, de préférence en compost. On entend par « *compostage* » un compostage par exemple traditionnel ou industriel, mettant en œuvre notamment une action de micro-organismes pour dégrader et putréfier des déchets de la première fraction de déchets 13, ces micro-organismes étant naturellement présents dans la première fraction de déchets 13 et/ou ajoutés à la première fraction de déchets 13, et/ou amenés à se multiplier dans la première fraction de déchets 13. Le présent compostage met en œuvre en particulier une aération de la première fraction de déchets 13, et/ou une régulation de l'humidité de la première fraction de déchets 13 (par exemple par adjonction d'eau, et/ou réintroduction dans la première fraction de déchets 13 de jus de compostage 11 émis par cette dernière), et/ou une adjonction de micro-organismes à la première fraction de déchets 13 et/ou une adjonction de structurants pour stimuler le processus de compostage, et/ou un apport de lumière, par exemple solaire.

Préférentiellement, l'étape A correspond à, ou comprend, une phase de dégradation des déchets, notamment biodégradables, alors que l'étape C correspond à, ou comprend, une phase de maturation des déchets, notamment biodégradables, pour obtenir le mélange de déchets affinés 28, ce dernier formant avantageusement du compost. La phase de dégradation se traduit avantageusement par une prolifération des micro-organismes dans la première fraction de déchets 13, alors que la phase de maturation se traduit préférentiellement par la diminution progressive de la quantité de micro-organismes ayant proliféré lors de la phase de dégradation, et la conservation de micro-organismes bénéfiques pour les sols. Les phases de dégradation et de maturations peuvent se chevaucher ou même être confondues.

L'invention concerne également en tant que tel un procédé de tri pour trier un mélange de déchets 2 de tailles, de formes et de consistances hétéroclites, comprenant au moins des déchets biodégradables et des déchets recyclables non biodégradables, une portion non négligeable de la masse du mélange de déchets étant formée par des déchets biodégradables, par exemple au moins 10 % de la masse, et une portion non négligeable de la masse du mélange étant formée par des déchets recyclables non biodégradables, par exemple au moins 10 % de la masse, ledit procédé de tri étant caractérisé en ce que, successivement :
- on introduit le mélange de déchets 2 dans une première section de trommel 3, pourvue d'une première paroi de séparation 5 s'étendant sur une première longueur L1 axiale et étant pourvue d'une première série d'orifices de séparation 7, 8 traversants,
- on sépare le mélange de déchets 2 en une première fraction de déchets 13 franchissant ladite première paroi de séparation 5 par l'intermédiaire de la première série d'orifices de séparation 7, 8 et en une deuxième fraction résiduelle de déchets 14, le mélange de déchets 2 circulant le long de ladite première paroi pour être ainsi séparé,
- on fait passer la deuxième fraction résiduelle de déchets 14 de la première section de trommel 3 à une deuxième section de trommel 4, pourvue d'une deuxième paroi de séparation 6 s'étendant sur une deuxième longueur L2 axiale inférieure à la première longueur L1, ladite deuxième paroi de séparation 6 étant pourvue d'une deuxième série d'orifices de séparation 9 traversants,
- on sépare la deuxième fraction résiduelle de déchets 14 en une sous-fraction de petits déchets 15 franchissant ladite deuxième paroi de séparation 6 par l'intermédiaire de ladite deuxième série d'orifices de séparation 9 et en une sous-fraction de gros déchets 16 résiduelle, la sous-fraction de gros déchets 16 étant formée par des déchets dont la taille est supérieure à la sous-fraction de petits déchets 15, la deuxième fraction résiduelle de déchets 14 étant destinée à circuler le long de ladite deuxième paroi pour être ainsi séparée, ladite deuxième série d'orifices de séparation 9 comprenant au moins des orifices tertiaires 9 permettant au moins de contribuer à séparer la deuxième fraction résiduelle de déchets 14 selon la sous-fraction de petits déchets 15 et selon la sous-fraction de gros déchets 16 par passage de la sous-fraction de petits déchets 15 au travers desdits orifices tertiaires 9, lesdits orifices tertiaires 9 étant de section oblongue, et ladite section oblongue présentant un petit diamètre Dp, et un grand diamètre Dg,les orifices tertiaires 9 étant répartis en rangées successives le long de la deuxième longueur L2, en alternant au moins :
   ∘ une rangée longitudinale 19 d'orifices tertiaires 9, dans laquelle le grand diamètre Dg des orifices tertiaires 9 de la rangée droite est aligné dans le sens de la deuxième longueur L2, et
   ∘ une rangée transversale 20 d'orifices tertiaires 9, dans laquelle le petit diamètre Dp des orifices tertiaires 9 de la rangée transversale 20 est aligné dans le sens de la deuxième longueur L2.

Le procédé de l'invention pourra avantageusement être effectué à l'aide de la machine de tri 1 décrite ci-avant.

### POSSIBILITE D'APPLICATION INDUSTRIELLE

L'invention trouve son application industrielle dans la conception, la réalisation et la mise en œuvre de moyens de tri d'un mélange de déchets de tailles, de formes et de consistances hétéroclites, mélange comprenant des déchets biodégradables et des déchets recyclables non biodégradables.

## Revendications

1. - Machine de tri (1) rotative d'un mélange de déchets (2), ces derniers étant de tailles, de formes et de consistances hétéroclites, le mélange de déchets (2) comprenant au moins des déchets biodégradables et des déchets recyclables non biodégradables, ladite machine de tri (1) étant **caractérisée en ce qu'**elle comprend au moins :
- une première section de trommel (3), pourvue d'une première paroi de séparation (5) s'étendant sur une première longueur (L1) axiale et étant pourvue d'une première série d'orifices de séparation (7, 8) traversants permettant de séparer le mélange de déchets (2) en une première fraction de déchets (13) franchissant ladite première paroi de séparation (5) par l'intermédiaire de la première série d'orifices de séparation (7, 8) et en une deuxième fraction résiduelle de déchets (14), le mélange de déchets (2) étant destiné à circuler le long de ladite première paroi pour être ainsi séparé, et
- une deuxième section de trommel (4), pourvue d'une deuxième paroi de séparation (6) s'étendant sur une deuxième longueur (L2) axiale inférieure à la première longueur (L1), ladite deuxième paroi de séparation (6) étant pourvue d'une deuxième série d'orifices de séparation traversants permettant de séparer la deuxième fraction résiduelle de déchets (14) en une sous-fraction de petits déchets (15) franchissant ladite deuxième paroi de séparation (6) par l'intermédiaire de ladite deuxième série d'orifices de séparation et en une sous-fraction de gros déchets (16) résiduelle, la sous-fraction de gros déchets (16) étant formée par des déchets dont la taille est supérieure à la sous-fraction de petits déchets (15), la deuxième fraction résiduelle de déchets (14) étant destinée à circuler le long de ladite deuxième paroi pour être ainsi séparée, **caractérisée en ce que** ladite deuxième série d'orifices de séparation comprend au moins des orifices tertiaires (9) permettant au moins de contribuer à séparer la deuxième fraction résiduelle de déchets (14) selon la sous-fraction de petits déchets (15) et selon la sous-fraction de gros déchets (16) par passage de la sous-fraction de petits déchets (15) au travers desdits orifices tertiaires (9), lesdits orifices tertiaires (9) étant de section oblongue, et ladite section oblongue présentant un petit diamètre (Dp), et un grand diamètre (Dg),
les orifices tertiaires (9) étant répartis en rangées successives le long de la deuxième longueur (L2), en alternant au moins :
∘ une rangée longitudinale (19) d'orifices tertiaires (9), dans laquelle le grand diamètre (Dg) des orifices tertiaires (9) de la rangée droite est aligné dans le sens de la deuxième longueur (L2), et
∘ une rangée transversale (20) d'orifices tertiaires (9), dans laquelle le petit diamètre (Dp) des orifices tertiaires (9) de la rangée transversale (20) est aligné dans le sens de la deuxième longueur (L2).

2. - Machine de tri (1) selon la revendication 1, **caractérisée en ce que** la première longueur (L1) vaut au moins 1,05 fois la deuxième longueur (L2), de préférence au moins 1,10 fois, de manière encore plus préférentielle au moins 1,12 fois.

3. - Machine de tri (1) d'un mélange de déchets (2) selon l'une quelconque des revendications précédentes, **caractérisée en ce que** la première série d'orifices de séparation (7, 8) comprend au moins des orifices primaires (7) permettant au moins de contribuer à séparer le mélange de déchets (2) selon la première fraction de déchets (13) et selon la deuxième fraction résiduelle de déchets (14) par passage de la première fraction de déchets (13) au travers desdits orifices primaires (7), ces derniers étant d'une taille adaptée pour interdire le passage de déchets d'une taille supérieure à 80 mm.

4. - Machine de tri (1) d'un mélange de déchets (2) selon la revendication précédente, **caractérisée en ce que** les orifices primaires (7) sont de section circulaire, et d'un diamètre compris entre 85 mm et 95 mm, de préférence environ 90 mm.

5. - Machine de tri (1) d'un mélange de déchets (2) selon l'une quelconque des revendications 3 ou 4, **caractérisée en ce que** la première série d'orifices de séparation (7, 8) comprend également des orifices secondaires (8) permettant de contribuer à séparer le mélange de déchets (2) selon la première fraction de déchets (13) et selon la deuxième fraction résiduelle de déchets (14) par passage de la première fraction de déchets (13) au travers desdits orifices secondaires (8), ces derniers étant d'une taille adaptée pour autoriser le passage de déchets dont la taille est comprise entre 1 fois et 1,5 fois la taille des déchets dont le passage est autorisé par les orifices primaires (7), les orifices secondaires (8) étant disposés en amont des orifices primaires (7), en considération du sens de la circulation du mélange de déchets (2).

6. - Machine de tri (1) d'un mélange de déchets (2) selon la revendication précédente, **caractérisée en ce que** les orifices secondaires (8) sont de section circulaire, et d'un diamètre compris entre 105 mm et 115 mm, de préférence environ 110 mm.

7. - Machine de tri (1) selon l'une quelconque des revendications précédentes, **caractérisée en ce que**, pour chaque orifice tertiaire (9), le petit diamètre (Dp) est compris entre 200 et 240 mm, de préférence environ 220 mm, le grand diamètre (Dg) étant compris entre 300 et 400 mm, de préférence environ 330 mm, le petit diamètre (Dp) étant sensiblement perpendiculaire au grand diamètre (Dg).

8. - Machine de tri (1) selon l'une quelconque des revendications précédentes, **caractérisée en ce que** les orifices de séparation (7,8) de la première série d'orifices de séparation (7, 8) sont répartis sur la première paroi de séparation (5) selon un premier maillage en quinconce, les orifices de séparation de la deuxième série d'orifices de séparation étant répartis sur la deuxième paroi de séparation (6) selon un deuxième maillage en quinconce.

9. - Machine de tri (1) selon l'une quelconque des revendications précédentes, **caractérisé en ce que** la première section de trommel (3) et la deuxième section de trommel (4) sont conçues chacune pour être mises en rotation, la rotation s'effectuant alternativement dans un sens et dans l'autre selon une fréquence souhaitée.

10. -Procédé de tri pour trier un mélange de déchets (2) de tailles, de formes et de consistances hétéroclites, comprenant au moins des déchets biodégradables et des déchets recyclables non biodégradables, une portion non négligeable de la masse du mélange de déchets étant formée par des déchets biodégradables, par exemple au moins 10 % de la masse, et une portion non négligeable de la masse du mélange étant formée par des déchets recyclables non biodégradables, par exemple au moins 10 % de la masse, ledit procédé de tri étant **caractérisé en ce que**, successivement :
- on introduit le mélange de déchets (2) dans une première section de trommel (3), pourvue d'une première paroi de séparation (5) s'étendant sur une première longueur (L1) axiale et étant pourvue d'une première série d'orifices de séparation (7, 8) traversants,
- on sépare le mélange de déchets (2) en une première fraction de déchets (13) franchissant ladite première paroi de séparation (5) par l'intermédiaire de la première série d'orifices de séparation (7, 8) et en une deuxième fraction résiduelle de déchets (14), le mélange de déchets (2) circulant le long de ladite première paroi pour être ainsi séparé,
- on fait passer la deuxième fraction résiduelle de déchets (14) de la première section de trommel (3) à une deuxième section de trommel (4), pourvue d'une deuxième paroi de séparation (6) s'étendant sur une deuxième longueur (L2) axiale inférieure à la première longueur (L1), ladite deuxième paroi de séparation (6) étant pourvue d'une deuxième série d'orifices de séparation traversants,
- on sépare la deuxième fraction résiduelle de déchets (14) en une sous-fraction de petits déchets (15) franchissant ladite deuxième paroi de séparation (6) par l'intermédiaire de ladite deuxième série d'orifices de séparation et en une sous-fraction de gros déchets (16) résiduelle, la sous-fraction de gros déchets (16) étant formée par des déchets dont la taille est supérieure à la sous-fraction de petits déchets (15), la deuxième fraction résiduelle de déchets (14) étant destinée à circuler le long de ladite deuxième paroi pour être ainsi séparée, ladite deuxième série d'orifices de séparation comprenant au moins des orifices tertiaires (9) permettant au moins de contribuer à séparer la deuxième fraction résiduelle de déchets (14) selon la sous-fraction de petits déchets (15) et selon la sous-fraction de gros déchets (16) par passage de la sous-fraction de petits déchets (15) au travers desdits orifices tertiaires (9), lesdits orifices tertiaires (9) étant de section oblongue, et ladite section oblongue présentant un petit diamètre (Dp), et un grand diamètre (Dg),
les orifices tertiaires (9) étant répartis en rangées successives le long de la deuxième longueur (L2), en alternant au moins :
∘ une rangée longitudinale (19) d'orifices tertiaires (9), dans laquelle le grand diamètre (Dg) des orifices tertiaires (9) de la rangée droite est aligné dans le sens de la deuxième longueur (L2), et
∘ une rangée transversale (20) d'orifices tertiaires (9), dans laquelle le petit diamètre (Dp) des orifices tertiaires (9) de la rangée transversale (20) est aligné dans le sens de la deuxième longueur (L2).

11. - Procédé de tri pour trier un mélange de déchets (2) selon la revendication 10 **caractérisé en ce que** l'on introduit le mélange de déchets (2) dans une première section de trommel (3) pourvue d'une première paroi de séparation (5) dont première longueur (L1) vaut au moins 1,05 fois, de préférence au moins 1,10 fois, de manière encore plus préférentielle au moins 1,12 fois la deuxième longueur (L2) de la deuxième section de trommel (4) dans laquelle on fait passer la deuxième fraction résiduelle de déchets (14).

## Patentansprüche

1. Rotierende Sortiermaschine (1) für ein Abfallgemisch (2), wobei die Abfälle heterogene Größen, Formen und Konsistenzen aufweisen, wobei das Abfallgemisch (2) zumindest biologisch abbaubare Abfälle und nicht biologisch abbaubare, recyclingfähige Abfälle umfasst, wobei die Sortiermaschine (1) **dadurch gekennzeichnet ist, dass** sie mindestens umfasst:
- einen ersten Trommelabschnitt (3), der mit einer ersten Trennwand (5) versehen ist, die sich über eine erste axiale Länge (L1) erstreckt und mit einer ersten Reihe von durchgehenden Trennöffnungen (7, 8), durch die das Abfallgemisch (2) in eine erste Abfallfraktion (13), die die erste Trennwand (5) über die erste Reihe von Trennöffnungen (7, 8) passiert, und in eine verbleibende, zweite Abfallfraktion (14) getrennt werden kann, wobei das Abfallgemisch (2) dazu bestimmt ist, entlang der ersten Wand zu zirkulieren, um auf diese Weise getrennt zu werden, und
- einen zweiten Trommelabschnitt (4), der mit einer zweiten Trennwand (6) versehen ist, die sich über eine zweite axiale Länge (L2) erstreckt, die kürzer ist als die erste Länge (L1), wobei die zweite Trennwand (6) mit einer zweiten Reihe von durchgehenden Trennöffnungen versehen ist, die es ermöglichen, die verbleibende, zweite Abfallfraktion (14) in eine Unterfraktion von kleinteiligen Abfällen (15), die die zweite Trennwand (6) über die zweite Reihe von Trennöffnungen passiert, und in eine verbleibende Unterfraktion von großteiligen Abfällen (16) zu trennen, wobei die Unterfraktion von großteiligen Abfällen (16) aus Abfällen gebildet wird, deren Größe größer ist als die Unterfraktion von kleinteiligen Abfällen (15), wobei die verbleibende zweite Abfallfraktion (14) dazu bestimmt ist, entlang der zweiten Wand zu zirkulieren, um so getrennt zu werden,
**dadurch gekennzeichnet, dass** die zweite Reihe von Trennöffnungen wenigstens dritte Öffnungen (9) umfasst, die wenigstens dazu beitragen, die verbleibende, zweite Abfallfraktion (14) in die Unterfraktion der kleinteiligen Abfälle (15) und die Unterfraktion des großteiligen Abfälle (16) zu trennen, indem die Unterfraktion der kleinteiligen Abfälle (15) durch die dritten Öffnungen (9) geführt werden, wobei die dritten Öffnungen (9) einen länglichen Querschnitt haben und der längliche Querschnitt einen kleinen Durchmesser (Dp) und einen großen Durchmesser (Dg) hat,
die dritten Öffnungen (9) in aufeinanderfolgenden Reihen entlang der zweiten Länge (L2) verteilt sind, wobei abwechselnd mindestens:
∘ eine Längsreihe (19) von dritten Öffnungen (9), bei der der große Durchmesser (Dg) der dritten Öffnungen (9) der geraden Reihe in Richtung der zweiten Länge (L2) ausgerichtet ist, und
∘ eine Querreihe (20) von dritten Öffnungen (9), bei der der kleine Durchmesser (Dp) der dritten Öffnungen (9) der Querreihe (20) in Richtung der zweiten Länge (L2) ausgerichtet ist.

2. Sortiermaschine (1) nach Anspruch 1, **dadurch gekennzeichnet, dass** die erste Länge (L 1) mindestens das 1,05-fache der zweiten Länge (L2) beträgt, vorzugsweise mindestens das 1,10-fache, überaus bevorzugt mindestens das 1,12-fache.

3. Sortiermaschine (1) für ein Abfallgemisch (2) nach einem der vorhergehenden Ansprüche, **dadurch gekennzeichnet, dass** die erste Reihe von Trennöffnungen (7, 8) zumindest primäre Öffnungen (7) umfasst, die es ermöglichen, zumindest zur Trennung des Abfallgemisches (2) in die erste Abfallfraktion (13) und in die verbleibende, zweite Abfallfraktion (14) durch Durchgang der ersten Abfallfraktion (13) durch die primären Öffnungen (7) beizutragen, wobei letztere eine Größe haben, die geeignet ist, den Durchgang von Abfällen mit einer Größe von mehr als 80 mm zu verhindern.

4. Sortiermaschine (1) für ein Abfallgemisch (2) nach einem der vorhergehenden Ansprüche, **dadurch gekennzeichnet, dass** die primären Öffnungen (7) einen kreisförmigen Querschnitt haben und einen Durchmesser zwischen 85 mm und 95 mm, vorzugsweise etwa 90 mm, aufweisen.

5. Sortiermaschine (1) für ein Abfallgemisch (2) nach einem der Ansprüche 3 oder 4, **dadurch gekennzeichnet, dass** die erste Reihe von Trennöffnungen (7, 8) auch sekundäre Öffnungen (8) umfasst, die es ermöglichen dazu beitragen, das Abfallgemisch (2) in die erste Abfallfraktion (13) und in die verbleibende, zweite Abfallfraktion (14) durch Durchgang der ersten Abfallfraktion (13) durch die sekundären Öffnungen (8) zu trennen, wobei letztere von einer Größe sind, die geeignet ist, den Durchgang von Abfällen zu ermöglichen, deren Größe zwischen dem 1-fachen und 1,5-fachen der Größe der Abfälle liegt, deren Durchgang durch die primären Öffnungen (7) ermöglicht wird, wobei die sekundären Öffnungen (8) stromaufwärts von den primären Öffnungen (7) angeordnet sind, unter Berücksichtigung der Flussrichtung des Abfallgemisches (2).

6. Sortiermaschine (1) für ein Abfallgemisch (2) nach dem vorhergehenden Anspruch, **dadurch gekennzeichnet, dass** die sekundären Öffnungen (8) einen kreisförmigen Querschnitt haben und einen Durchmesser zwischen 105 mm und 115 mm, vorzugsweise etwa 110 mm, aufweisen.

7. Sortiermaschine (1) nach einem der vorhergehenden Ansprüche, **dadurch gekennzeichnet, dass** für jede dritte Öffnung (9) der kleine Durchmesser (Dp) zwischen 200 und 240 mm, vorzugsweise bei etwa 220 mm, liegt, der große Durchmesser (Dg) zwischen 300 und 400 mm, vorzugsweise bei etwa 330 mm, liegt, wobei der kleine Durchmesser (Dp) im Wesentlichen senkrecht zum großen Durchmesser (Dg) verläuft.

8. Sortiermaschine (1) nach einem der vorhergehenden Ansprüche, **dadurch gekennzeichnet, dass** die Trennöffnungen (7, 8) der ersten Reihe von Trennöffnungen (7, 8) in einer ersten versetzten Anordnung über die erste Trennwand (5) verteilt sind, wobei die Trennöffnungen der zweiten Reihe von Trennöffnungen in einer zweiten versetzten Anordnung über die zweite Trennwand (6) verteilt sind.

9. Sortiermaschine (1) nach einem der vorhergehenden Ansprüche, **dadurch gekennzeichnet, dass** der erste Trommelabschnitt (3) und der zweite Trommelabschnitt (4) jeweils dazu eingerichtet sind, dass sie in Drehung versetzt werden können, wobei die Drehung abwechselnd in eine Richtung und in die andere Richtung gemäß einer gewünschten Frequenz erfolgt.

10. Verfahren zum Sortieren eines Abfallgemisches (2) mit heterogenen Größen, Formen und Konsistenzen, das zumindest biologisch abbaubare Abfälle und nicht biologisch abbaubare, recyclingfähige Abfälle umfasst, wobei ein nicht unerheblicher Teil der Masse des Abfallgemisches aus biologisch abbaubaren Abfällen besteht, beispielsweise mindestens 10 % der Masse, und ein nicht unerheblicher Teil der Masse des Gemisches aus nicht biologisch abbaubaren, recyclingfähigen Abfällen besteht, beispielsweise mindestens 10 % der Masse, wobei das Verfahren zum Sortieren **dadurch gekennzeichnet ist, dass** folgendermaßen vorgegangen wird:
- Einleiten des Abfallgemisches (2) in einen ersten Trommelabschnitt (3), der mit einer ersten Trennwand (5) versehen ist, die sich über eine erste axiale Länge (L1) erstreckt und mit einer ersten Reihe von durchgehenden Trennöffnungen (7, 8) versehen ist,
- Trennen des Abfallgemisches (2) in eine erste Abfallfraktion (13), die die erste Trennwand (5) über die erste Reihe von Trennöffnungen (7, 8) passiert, und in eine verbleibende, zweite Abfallfraktion (14), wobei das Abfallgemisch (2) entlang der ersten Wand zirkuliert, um so getrennt zu werden,
- Durchleiten der verbleibenden, zweiten Abfallfraktion (14) von dem ersten Trommelabschnitt (3) zu einem zweiten Trommelabschnitt (4), der mit einer zweiten Trennwand (6) versehen ist, die sich über eine zweite axiale Länge (L2) erstreckt, die kleiner ist als die erste Länge (L1), wobei die zweite Trennwand (6) mit einer zweiten Reihe von durchgehenden Trennöffnungen versehen ist,
- Trennen der verbleibenden, zweiten Abfallfraktion (14) in eine Unterfraktion von kleinteiligen Abfällen (15), die die zweite Trennwand (6) durch die zweite Reihe von Trennöffnungen passiert, und in eine verbleibende Unterfraktion von großteiligen Abfällen (16), wobei die Unterfraktion von großteiligen Abfällen (16) aus Abfällen gebildet wird, deren Größe größer ist als die Unterfraktion von kleinteiligen Abfällen (15), wobei die verbleibende zweite Abfallfraktion (14) dazu bestimmt ist, entlang der zweiten Wand zu zirkulieren, um so getrennt zu werden, die zweite Reihe von Trennöffnungen wenigstens dritte Öffnungen (9) umfasst, die wenigstens dazu beitragen, die verbleibende, zweite Abfallfraktion (14) in die Unterfraktion der kleinteiligen Abfälle (15) und die Unterfraktion des großteiligen Abfälle (16) zu trennen, indem die Unterfraktion der kleinteiligen Abfälle (15) durch die dritten Öffnungen (9) geführt werden, wobei die dritten Öffnungen (9) einen länglichen Querschnitt haben und der längliche Querschnitt einen kleinen Durchmesser (Dp) und einen großen Durchmesser (Dg) hat,
die dritten Öffnungen (9) in aufeinanderfolgenden Reihen entlang der zweiten Länge (L2) verteilt sind, wobei abwechselnd mindestens:
∘ eine Längsreihe (19) von dritten Öffnungen (9), bei der der große Durchmesser (Dg) der dritten Öffnungen (9) der geraden Reihe in Richtung der zweiten Länge (L2) ausgerichtet ist, und
∘ eine Querreihe (20) von dritten Öffnungen (9), bei der der kleine Durchmesser (Dp) der dritten Öffnungen (9) der Querreihe (20) in Richtung der zweiten Länge (L2) ausgerichtet ist.

11. Verfahren zum Sortieren eines Abfallgemisches (2) nach Anspruch 10, **dadurch gekennzeichnet, dass** das Abfallgemisch (2) in einen ersten Trommelabschnitt (3) eingeführt wird, der mit einer ersten Trennwand (5) versehen ist, deren erste Länge (L1) mindestens 1,05-mal, bevorzugt mindestens 1,10-mal, noch bevorzugter mindestens 1,12-mal die zweite Länge (L2) des zweiten Trommelabschnitts (4) beträgt, in den die verbleibende, zweite Abfallfraktion (14) geleitet wird.

## Claims

1. A rotary machine (1) for sorting a mixture of wastes (2), the latter being of heterogeneous sizes, shapes and consistencies, the mixture of wastes (2) comprising at least biodegradable wastes and non-biodegradable recyclable wastes, said sorting machine (1) being **characterized in that** it comprises at least:
- one first trommel section (3), provided with a first separation wall (5) extending over a first axial length (L1) and being provided with a first series of separation through orifices (7, 8) allowing separating the mixture of wastes (2) into a first fraction of wastes (13) getting through said first separation wall (5) via the first series of separation orifices (7, 8) and into a residual second fraction of wastes (14), the mixture of wastes (2) being intended to circulate along said first wall so as to be separated, and
- one second trommel section (4), provided with a second separation wall (6) extending over a second axial length (L2) smaller than the first length (L1), said second separation wall (6) being provided with a second series of separation through orifices allowing separating the residual second fraction of wastes (14) into a subfraction of small-sized wastes (15) getting through said second separation wall (6) via said second series of separation orifices and into a residual subfraction of large-sized wastes (16), the subfraction of large-sized wastes (16) being formed by wastes the size of which is larger than the subfraction of small-sized wastes (15), the residual second fraction of wastes (14) being intended to circulate along said second wall so as to be separated,
**characterized in that** said second series of separation orifices comprises at least tertiary orifices (9) at least contributing to the separation of the residual second fraction of wastes (14) into the subfraction of small-sized wastes (15) and into the subfraction of large-sized wastes (16) by passage of the subfraction of small-sized wastes (15) throughout said tertiary orifices (9), the section of said tertiary orifices (9) being oblong-shaped, and said oblong section having a small diameter (Dp), and a large diameter (Dg), the tertiary orifices (9) being distributed in successive rows along the second length (L2), by alternating at least:
∘ a longitudinal row (19) of tertiary orifices (9), in which the large diameter (Dg) of the tertiary orifices (9) of the straight row is aligned in the direction of the second length (L2), and
∘ a transverse row (20) of tertiary orifices (9), in which the small diameter (Dp) of the tertiary orifices (9) of the transverse row (20) is aligned in the direction of the second length (L2).

2. The sorting machine (1) according to claim 1, **characterized in that** the first length (L1) is at least equal to 1.05 times the second length (L2), preferably at least 1.10 times, still more preferably at least 1.12 times.

3. The machine (1) for sorting a mixture of wastes (2) according to any one of the preceding claims, **characterized in that** the first series of separation orifices (7, 8) comprises at least primary orifices (7) enabling at least contributing to the separation of the mixture of wastes (2) into the first fraction of wastes (13) and into the residual second fraction of wastes (14) by passage of the first fraction of wastes (13) throughout said primary orifices (7), the latter having a size adapted to prevent the passage of wastes with a size larger than 80 mm.

4. The machine (1) for sorting a mixture of wastes (2) according to the preceding claim, **characterized in that** the section of the primary orifices (7) is circular, with a diameter comprised between 85 mm and 95 mm, preferably about 90 mm.

5. The machine (1) for sorting a mixture of wastes (2) according to any one of claims 4 or 5, **characterized in that** the first series of separation orifices (7, 8) also comprises secondary orifices (8) enabling contributing to the separation of the mixture of wastes (2) into the first fraction of wastes (13) and into the residual second fraction of wastes (14) by passage of the first fraction of wastes (13) throughout said secondary orifices (8), the latter having a size adapted to allow the passage of wastes the size of which is comprised between 1 and 1.5 times the size of the wastes the passage of which is allowed by the primary orifices (7), the secondary orifices (8) being disposed upstream of the primary orifices (7), with regards to the flow direction of the mixture of wastes (2).

6. The machine (1) for sorting a mixture of wastes (2) according to the preceding claim, **characterized in that** the section of the secondary orifices (8) is circular, with a diameter comprised between 105 mm and 115 mm, preferably about 110 mm.

7. The sorting machine (1) according to any one of the preceding claims, **characterized in that**, for each tertiary orifice (9), the small diameter (Dp) is comprised between 200 and 240 mm, preferably about 220 mm, the large diameter (Dg) being comprised between 300 and 400 mm, preferably about 330 mm, the small diameter (Dp) being substantially perpendicular to the large diameter (Dg).

8. The sorting machine (1) according to any one of the preceding claims, **characterized in that** the separation orifices (7, 8) of the first series of separation orifices (7, 8) are distributed over the first separation wall (5) according to a first staggered meshing, the separation orifices (9) of the second series of separation orifices (9) being distributed over the second separation wall (6) according to a second staggered meshing.

9. The sorting machine (1) according to any one of the preceding claims, **characterized in that** each of the first trommel section (3) and the second trommel section (4) is designed to be rotated, the rotation is performed in an alternating manner in one direction and in the other according to a desired frequency.

10. A sorting method for sorting a mixture of wastes (2) with heterogeneous sizes, shapes and consistencies, comprising at least biodegradable wastes and non-biodegradable recyclable wastes, a non-negligible portion of the mass of the mixture of wastes being formed by biodegradable wastes, for example at least 10% of the mass, and a non-negligible portion of the mass of the mixture being formed by non-biodegradable recyclable wastes, for example at least 10% of the mass, said sorting method being **characterized in that** it includes the following successive steps:
- introducing the mixture of wastes (2) in a first trommel section (3), provided with a first separation wall (5) extending over a first axial length (L1) and being provided with a first series of separation through orifices (7, 8),
- separating the mixture of wastes (2) into a first fraction of wastes (13) getting through said first separation wall (5) via the first series of separation orifices (7, 8) and into a residual second fraction of wastes (14), the mixture of wastes (2) circulating along said first wall so as to be separated,
- making the residual second fraction of wastes (14) pass from the first trommel section (3) to a second trommel section (4), provided with a second separation wall (6) extending over a second axial length (L2) smaller than the first length (L1), said second separation wall (6) being provided with a second series of separation through orifices,
- separating the residual second fraction of wastes (14) into a subfraction of small-sized wastes (15) getting through said second separation wall (6) via said second series of separation orifices (9) and into a residual subfraction of large-sized wastes (16), the subfraction of large-sized wastes (16) being formed by wastes the size of which is larger than the subfraction of small-sized wastes (15), the residual second fraction of wastes (14) being intended to circulate along said second wall so as to be separated, said second series of separation orifices comprises at least tertiary orifices (9) at least contributing to the separation of the residual second fraction of wastes (14) into the subfraction of small-sized wastes (15) and into the subfraction of large-sized wastes (16) by passage of the subfraction of small-sized wastes (15) throughout said tertiary orifices (9), the section of said tertiary orifices (9) being oblong-shaped, and said oblong section having a small diameter (Dp), and a large diameter (Dg), the tertiary orifices (9) being distributed in successive rows along the second length (L2), by alternating at least:
∘ a longitudinal row (19) of tertiary orifices (9), in which the large diameter (Dg) of the tertiary orifices (9) of the straight row is aligned in the direction of the second length (L2), and
∘ a transverse row (20) of tertiary orifices (9), in which the small diameter (Dp) of the tertiary orifices (9) of the transverse row (20) is aligned in the direction of the second length (L2).

11. The method for sorting a mixture of wastes (2) according to claim 10 **characterized in that** the mixture of wastes (2) is introduced into a first trommel section (3) provided with a first separation wall (5) the first length (L1) of which is at least equal to 1.05 times, preferably at least 1.10 times, still more preferably at least 1.12 times the second length (L2) of the second trommel section (4) in which the residual second fraction of wastes (14) is passed.
